Europäisches Patentamt

European Patent Office

Office européen des brevets

(11) Veröffentlichungsnummer: **0 498 354 A2**

# EUROPÄISCHE PATENTANMELDUNG

(21) Anmeldenummer: **92101756.2**

(22) Anmeldetag: **04.02.92**

(51) Int. Cl.⁵: **B60G 5/053**, B60G 13/00

(30) Priorität: **07.02.91 DE 4103629**

(43) Veröffentlichungstag der Anmeldung:
**12.08.92 Patentblatt 92/33**

(84) Benannte Vertragsstaaten:
**DE ES FR GB IT**

(71) Anmelder: **Iveco Magirus Aktiengesellschaft**
**Schillerstrasse 2 Postfach 27 40**
**W-7900 Ulm/Donau(DE)**

(72) Erfinder: **Frank, Klaus-Dieter**
**Dobelstrasse 9/1**
**W-7325 Boll(DE)**

(74) Vertreter: **Socha, Peter, Dipl.-Ing.**
**Iveco Magirus AG Patentabteilung Postfach**
**27 40 Schillerstrasse 2**
**W-7900 Ulm(DE)**

(54) Dämpferanordnung für ein gependeltes Doppelachsaggregat eines Nutzfahrzeuges.

(57) Bei einer bekannten Dämpferanordnung zwischen Achse und Rahmen werden auf die Dämpfer sowohl die Federwege der Fahrbahnunebenheiten als auch die vertikalen Wege aufgrund des Pendelns der Achsaufhängung eingeleitet. Dies führt zu großen Dämpferwegen und Dämpfergeschwindigkeiten und vorzeitigem Verschleiß.

Es wird eine Dämpferanordnung (20) bei einer gependelten Blattfeder (6) einer Doppelachse (4, 5) eines Nutzfahrzeuges vorgeschlagen, wobei eine Längskonsole (7) an der zentralen Pendelachse (12) abgestützt ist. Die Längskonsole (7) bildet obere Anlenkpunkte (14) für die an der entsprechenden Achse (4 bzw. 5) angelenkten Dämpfer (1 bzw. 2), so daß diese nur die reinen Federwege aufnehmen müssen und die Dämpferwege aufgrund des Pendelns eliminiert werden.

Fig. 1

EP 0 498 354 A2

Die Erfindung betrifft eine Dämpferanordnung für ein gependeltes Doppelachsaggregat eines Nutzfahrzeuges, dessen beide Einzelachsen auf jeder Fahrzeugseite mittels durchgehender Blattfeder(n) um eine zentrale, am Fahrzeugrahmen abgestützte Pendelachse federnd aufgehängt sind und untere Anlenkpunkte für jeweils einen Dämpfer bilden.

Bei einer Dämpferanordnung für eine Nutzfahrzeug-Doppelachse der vorgenannten Art, welche beispielsweise nach DE-OS 2 210 070 bei einer liftbaren Hinterachse vorgesehen ist, werden in den Dämpfer sowohl die Federwege aufgrund von Fahrbahnunebenheiten als auch die vertikalen Wege aufgrund des Pendelns der Achsaufhängung eingeleitet. Die Wege aufgrund des Pendelns sind um ein vielfaches länger als die Federwege. Dies führt zu sehr großen Dämpferlängen und bei schnellem Achslastausgleich zu hohen Dämpfergeschwindigkeiten. Daraus resultiert eine starke Erwärmung des Hydrauliköls im Dämpfer sowie frühzeitiger Verschleiß der Dichtungen an den Dämpferrohren. Die Verwendung von teuren Spezialstoßdämpfern ist in vielen Fällen erforderlich.

Aufgabe der Erfindung ist die Schaffung einer Dämpferanordnung der eingangs genannten Art, welche mit Hilfe einfacher Mittel wirkungsvoll betrieben werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 9.

Wesen der Erfindung ist, die Dämpfer oberseitig nicht am Rahmen, sondern an einer Längskonsole zu befestigen, wobei die Längskonsole selbst an der zentralen Pendelachse abgestützt ist. Dadurch können bei einer Pendelbewegung die Dämpfer in gleicher Weise wie die Blattfeder pendeln, wodurch die langen pendelbedingten Dämpferwege im Dämpfer nicht aufgenommen werden müssen. Die Dämpfer unterliegen mithin im Betrieb einem geringeren Verschleiß, da sie nur die reinen Federwege aufnehmen müssen. Die Dämpfergeschwindigkeiten sind im Vergleich zum Stand der Technik deutlich reduziert. Das geforderte Dämpfungsmaß für "straßenfreundliche Bauweise" ist ohne Mehraufwand realisierbar. Es können bevorzugt herkömmliche kürzere Dämpfer verwendet werden. Besonderer Vorteil ist, daß zur Dämpfung der Pendelbewegung ein zusätzlicher (Pendel-)Dämpfer eingebaut werden kann, welcher oberseitig rahmenfest befestigt und speziell für eine optimale Dämpfung der Pendelbewegung ausgelegt ist. Durch die Erfindung kann mithin die Dämpfung der Pendelbewegung von der Dämpfung der Federbewegung funktionell getrennt werden.

Jeder Blattfeder bzw. jedem Blattfederpaket auf jeder Fahrzeugseite ist eine vorgenannte Längskonsole zugeordnet. Die Längskonsolen sind entweder zwangsgeführt, d.h. fest mit der Pendelfeder verbunden oder einfach frei drehbar gelagert.

Aus EP 0 149 262 A2 ist zwar eine elastische Kopplung beider Achsen durch ein zusätzliches Federelement und eine Dämpfung durch eine Dämpferanordnung bekannt. Die Dämpferanordnung liegt jedoch parallel zum Federelement über dem Drehpunkt außen am Rahmen und hat eine andere Wirkungsweise und Zielsetzung. Von Nachteil ist die Abhängigkeit der Federsteifigkeit der Aufhängung von der Beladung. Auch ist nur eine sehr geringe Dämpfung der über die Fahrbahnunebenheiten eingeleiteten Vertikalschwingungen möglich.

Die Erfindung wird nachfolgend anhand von Ausführungsbeispielen unter Bezugnahme auf die beigefügte Zeichnung näher erläutert; es zeigen:

Fig. 1    eine schematische Seitenansicht eine Dämpferanordnung einer gependelten Nutzfahrzeug-Doppelachse,

Fig. 2    eine schematische Draufsicht auf die Anordnung nach Fig. 1 mit Darstellung der gleichen Dämpferanordnung auf der anderen Fahrzeugseite,

Fig. 3    in einer schematischen Querschnittsansicht eine Dämpferanordnung nach den Fig. 1 und 2 mit einer fest mit der Pendelfeder verbundenen Längskonsole, und

Fig. 4    einen Schnitt ähnlich Fig. 3 mit einer frei drehbaren Längskonsole.

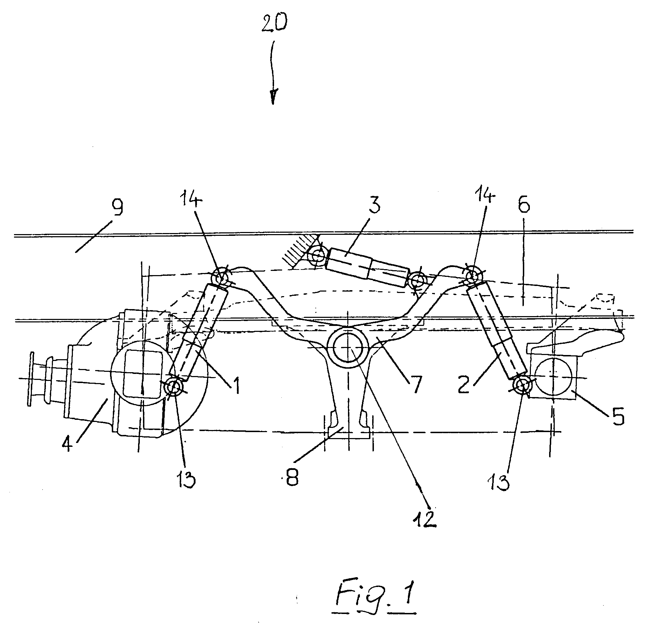

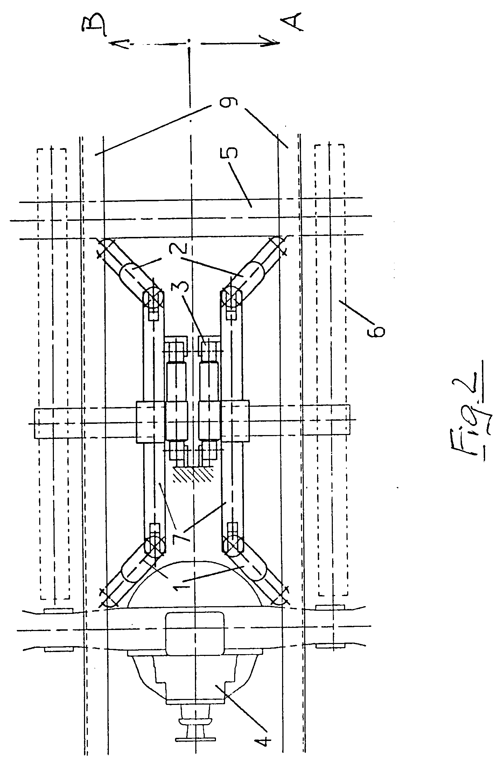

In den Fig. 1 und 2 ist eine Dämpferanordnung (20) im Bereich einer gependelten Doppelachse eines Nutzfahrzeuges gezeigt, dessen beide Einzelachsen (4, 5) mittels durchgehender Blattfeder (6) um eine zentrale fahrzeugrahmenfeste Pendelachse (12) federnd aufgehängt sind. Hierbei sind die Einzelachse (4) als angetriebene Hinterachse und die andere Einzelachse (5) als Nachlaufachse ausgebildet. Die Blattfeder ist bekanntermaßen ein kompaktes Blattfederpaket. Eine vorgenannte Dämpferanordnung (20) gleicher Ausgestaltung ist sowohl auf der linken Fahrzeugseite A als auch auf der rechten Fahrzeugseite B vorgesehen, wie dies insbesondere der Fig. 2 zu entnehmen ist.

Auf jeder Fahrzeugseite A und B ist eine Längskonsole (7) vorgesehen, welche ebenfalls an der zentralen Pendelachse (12) abgestützt ist. Die Längskonsole (7) ist ein einstückiges schlankes Winkelteil, dessen Wurzel mit der Pendelachse (12) zusammenfällt. Das vordere und hintere obere Ende der Längskonsole dient als oberer Anlenkpunkt (14) eines Dämpfers (1, 2), welcher unterseitig am unteren Anlenkpunkt (13) an der angetriebenen Hinterachse (4) bzw. nichtangetriebenen hinteren Nachlaufachse (5) befestigt ist.

An der Längskonsole (7) ist ferner ein sog. Pendeldämpfer (3) mit seinem unteren Ende angelenkt, welcher oberseitig am zugeordneten Rahmenlängsträger (9) gelenkig befestigt ist.

Jede der Dämpferanordnung (20) befindet sich innerhalb des zugeordneten Rahmenlängsträgers (9) auf jeder Fahrzeugseite (A, B). Die beiden Längskonsolen (7) auf jeder Fahrzeugseite sind nicht miteinander gekoppelt.

Die zentrale Pendelachse (12) der gependelten Blattfeder (6) liegt im Bereich der Abstützung für die Längslenker (8).

Ersichtlich ist die Anordnung nach den Fig. 1 und 2 so getroffen, daß bei einem gleichzeitigen Einfedern der angetriebenen Hinterachse (4) und der nichtangetriebenen Nachlaufachse (5) der Pendeldämpfer (3) praktisch unwirksam ist, da dieser im wesentlichen in horizontaler Erstreckung in Längsrichtung des Fahrzeugs angelenkt ist. Demgegenüber nehmen die Dämpfer (1 und 2) die reinen Federwege infolge von Fahrbahnunebenheiten auf, nicht die vertikalen Wege aufgrund des Pendelns der Achsaufhängung. Dadurch können vergleichsweise kurze Dämpfer (1 und 2) mit niedrigen Dämpfergeschwindigkeiten verwendet werden.

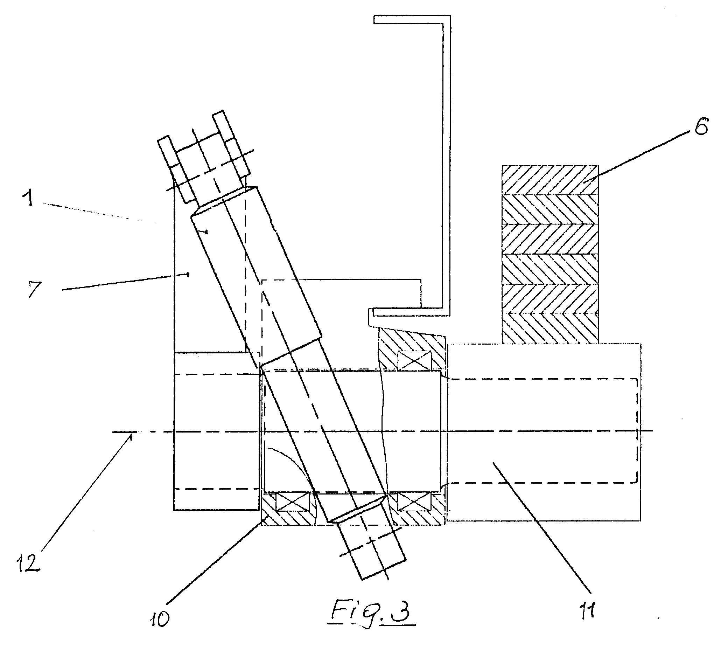

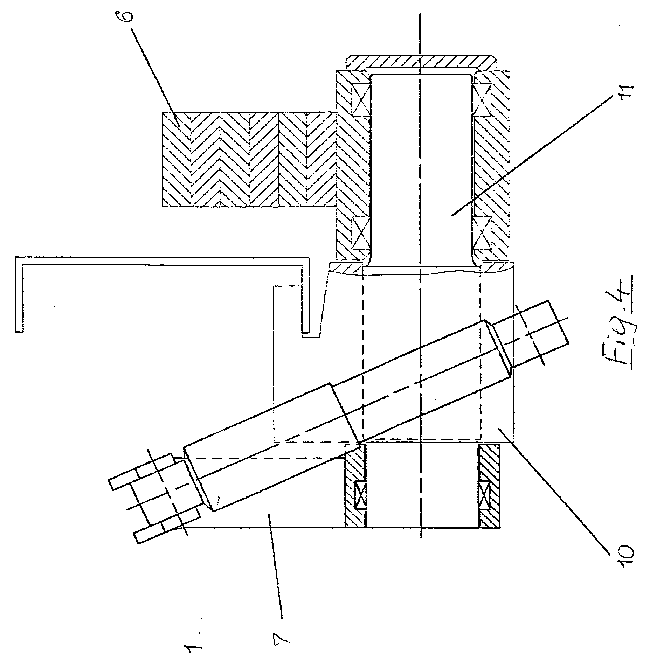

Die Längskonsolen (7) sind entweder zwangsgeführt, d.h. fest mit der zugehörigen gependelten Blattfeder (6) gemäß Ausführungsbeispiel nach Fig. 3 verbunden oder gemäß Ausführungsbeispiel nach Fig. 4 einfach frei drehbar gelagert.

Insbesondere ist gemäß Fig. 3 der Lagerzapfen (11), dessen Achse mit der Pendelachse (12) zusammenfällt, im Lagerbock (10) frei drehbar gelagert und insgesamt als kurze Welle ausgebildet. Die Längskonsole (7) und die gependelte Blattfeder (6) sind fest mit der Welle bzw. dem Lagerzapfen (11) verbunden. Die Längskonsole (7) ist also zwangsgeführt, d.h. sie schwenkt in Betrag und Richtung gleichermaßen wie die gependelte Blattfeder (6) um die Pendelachse (12).

Gemäß Fig. 4 ist der Lagerzapfen (11) fest im Lagerbock (10) mittig eingespannt. Die gependelte Blattfeder (6) ist auf dem äußersten Ende des Lagerzapfens (11) drehbar gelagert. Die Längskonsole (7) auf dem inneren Ende des Lagerzapfens (11) ist entsprechend frei drehbar gelagert: Längskonsole (7) und gependelte Blattfeder (6) können mithin unabhängig voneinander pendeln. Ist mithin die eine Achse eingefedert und die andere konstant, sind gleichwohl beide Dämpfer (1 und 2) etwa bei halbem Einfederweg in Funktion. Im Ergebnis ergibt sich mithin eine größere Dämpferwirkung.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Dämpferanordnung (20) für ein Nutzfahrzeug-Doppelachsaggregat, dessen beide Einzelachsen (4, 5) auf jeder Fahrzeugseite (A, B) mittels durchgehender Blattfeder(n) (6) um eine zentrale, am Fahrzeugrahmen abgestützte Pendelachse (12) federnd aufgehängt sind und untere Anlenkpunkte (13) für jeweils einen Dämpfer (1,2) bilden,
dadurch gekennzeichnet,
daß die oberen Anlenkpunkte (14) der beiden Dämpfer (1,2) an einer Längskonsole (7) gelegen sind, welche an der zentralen Pendelachse (12) abgestützt ist.

2. Dämpferanordnung nach Anspruch 1,
dadurch gekennzeichnet,
daß die Längskonsole (7) fest mit der gependelten Blattfeder (6) verbunden ist (Fig. 3).

3. Dämpferanordnung nach Anspruch 2,
dadurch gekennzeichnet,
daß die Längskonsole (7) fest auf der einen Seite eines Lagerzapfens (11) und die Blattfeder (6) fest auf der anderen Seite des Lagerzapfens (11) angeordnet sind, wobei der Lagerzapfen (11) mittig an einem fahrzeugfesten Lagerbock (10) um die zentrale Pendelachse (12) drehbar gelagert ist.

4. Dämpferanordnung nach Anspruch 1,
dadurch gekennzeichnet,
daß die Längskonsole (7) um die zentrale Pendelachse (12) frei drehbar gelagert ist (Fig. 4).

5. Dämpferanordnung nach Anspruch 4,
dadurch gekennzeichnet,
daß sowohl die Längskonsole (7) auf der einen Seite eines Lagerzapfens (11) als auch die Blattfeder (6) auf der anderen Seite des Lagerzapfens (11) um die zentrale Pendelachse (12) drehbar gelagert sind, wobei der Lagerzapfen (11) mittig mit einem fahrzeugfesten Lagerbock (10) fest verbunden ist.

6. Dämpferanordnung nach einem der Ansprüche 1 bis 5,
dadurch gekennzeichnet,
daß die Längskonsole (7) in Seitenansicht im wesentlichen V-Form besitzt bzw. ein Winkelteil ist, wobei die Wurzel des "V" bzw. des Winkels an der zentralen Pendelachse (12) abgestützt ist (Fig. 1).

7. Dämpferanordnung nach Anspruch 6,
dadurch gekennzeichnet,
daß die Längskonsole (7) als schlanke abgewinkelte Längspendelstange ausgebildet ist.

8. Dämpferanordnung nach einem der Ansprüche 1 bis 7,
dadurch gekennzeichnet,
daß die (rechte oder linke) Längskonsole (7) innerhalb des zugeordneten (rechten oder linken) Rahmenlängsträgers (9) des Nutzfahrzeuges angeordnet ist (Fig.2).

9. Dämpferanordnung nach einem der Ansprüche 1 bis 8,
dadurch gekennzeichnet,
daß zwischen der Längskonsole (7) und dem zugeordneten Rahmenlängsträger (9) zumindest ein Pendeldämpfer (3) angelenkt ist.

EP 0 498 354 A2

*Fig. 1*

Fig. 2

Fig.3

EP 0 498 354 A2

Fig. 4